Europäisches Patentamt

**European Patent Office**

Office européen des brevets

(11) Publication number: **0 103 656**
**A2**

(12) **EUROPEAN PATENT APPLICATION**

(21) Application number: **82111598.7**

(22) Date of filing: **14.12.82**

(51) Int. Cl.³: **C 01 B 3/04**

(30) Priority: **21.09.82**.

(43) Date of publication of application:
**28.03.84** Bulletin **84/13**

(84) Designated Contracting States:
**AT BE CH DE FR GB IT LI LU NL SE**

(71) Applicant: **Meyer, Stanley A.**
**3792 Broadway**
**Grove City Ohio 43123(US)**

(72) Inventor: **Meyer, Stanley A.**
**3792 Broadway**
**Grove City Ohio 43123(US)**

(74) Representative: **Wasmeier, Alfons, Dipl.-Ing. et al,**
**Postfach 382 Greflingerstrasse 7**
**D-8400 Regensburg(DE)**

(54) **Resonant cavity for a hydrogen generator.**

(57) A direct current voltage exciter for utilization in a non-electrolysis process and apparatus for separating hydrogen/oxygen gas from water. The non-oxidizing exciters comprise a plate structure with negative potential applied to one such exciter plate and a positive potential applied to the other. The spacing between plates comprises a resonant cavity to a particular frequency. The direct current voltage is pulsed at a repetition rate that matches the frequency of the resonant cavity. The sub-atomic action of the direct current voltage on the plates is enhanced considerably by the bombardment of the atoms within the resonant structure. A spherical plate construction is described with alternative structures of a resonant line.

./...

FIG.1

# RESONANT CAVITY FOR A HYDROGEN GENERATOR

CROSS REFERENCE:

In the non-electrolysis process disclosed and claimed in my co-pending patent application, Serial Number: 06/302,807, Filed: September 16, 1981, For: HYDROGEN GENERATOR SYSTEM, for separating hydrogen and oxygen atoms from water, water is passed between two plates of similar non-oxidizing metal. The one plate has placed thereon a positive potential and the other a negative potential from a very low-direct-current power source. The sub-atomic action of the direct current voltage causes the hydrogen and oxygen atoms to be separated. The contaminants in the water are forced also to disassociate itself and may be collected or utilized and disposed of. This in turn lends the process to recombining the hydrogen and oxygen into pure water.

The direct current voltage applied to the plates is non-regulated and non-filtered. The direct current acts as a static force on the water molecules; whereas the rippling direct current voltage acts as a dynamic force. Pulsating the direct current further acts as a dynamic force and enhances considerably the splitting of the atoms from the water molecules. An increase in voltage potential further increases the hydrogen output. Certain plate arrangements and configurations with graphical illustrations of relative efficiency are disclosed.

AC-2384

In my co-pending patent application, supra, it was shown the hydrogen gas generator is variably increased by varying the construction of the exciters; more particularly, by (1) increasing the area of the plates, (2) reducing the space between the plates, and (3) altering the physical configuration of the plate.

SUMMARY OF INVENTION:

The basic structure of and principals of operation of the aforesaid co-pending patent application are utilized. The non-oxidizing exciters are of a construction, spherical in a preferred embodiment, with a given spacing between the positive and negative elements to form a resonant cavity at a given frequency. The direct current voltage is pulsed at a repetition rate (frequency) to match the resonant wavelength.

At the matched frequency the sub-atomic action of the pulsed direct current voltage is enhanced considerably. The forceful action on the water molecule causes the molecules to be bombarded and break into its atomic structure at a much more rapid rate; thereafter, the gas atoms are set into motion within the resonant cavity, thereby increasing velocity to a jet-like action as they are released from a port.

The single resonant cavity has a controlled size port for the utilization of the high velocity gasses.

C-2384

The resonant cavity plate structure in a preferred arrangement is an array of elements. The gasses emitted from the array are combined and expelled as high velocity gasses from a common nozzle and utilized.

OBJECTS:

It is a principal object of the present invention to provide an improved structure that enhances the separation of hydrogen/oxygen gasses from water.

A further object of the present invention is to provide such a structure that enhances the sub-atomic action in a non-electrolysis process.

Another object of the present invention is to provide such a structure wherein the sub-atomic action is controlled.

Another object of the present invention is to provide such a structure wherein the velocity of the gasses released by a sub-atomic action are increased considerably.

Other objects and features of the present invention will become apparent from a detailed description of the invention when taken in conjunction with the drawings in which:

- 3 -

AC-2384

BRIEF DESCRIPTION OF DRAWINGS:

Figure 1 is a schematic illustration of the structure of the present invention in its most simplified arrangement.

Figures 2, 2A, and 2B, are a series of waveforms illustrating the pulse rate of the direct current to match the resonant frequency of the structure of Figure 1.

Figure 3 is a schematic illustration of the utilization of the structure of Figure 1.

Figure 4 is a first alternative structure to that shown in Figure 1.

Figure 5 is another alternative structure to that shown in Figure 1.

Figure 6 is another alternative structure to that shown in Figure 1.

Figures 7 and 7A are an array of exciters, such as shown in Figure 1, in a preferred embodiment.

Figure 8 is an array of exciters, such as shown in Figure 3, in a preferred embodiment.

2384

DETAILED DESCRIPTION OF INVENTION:

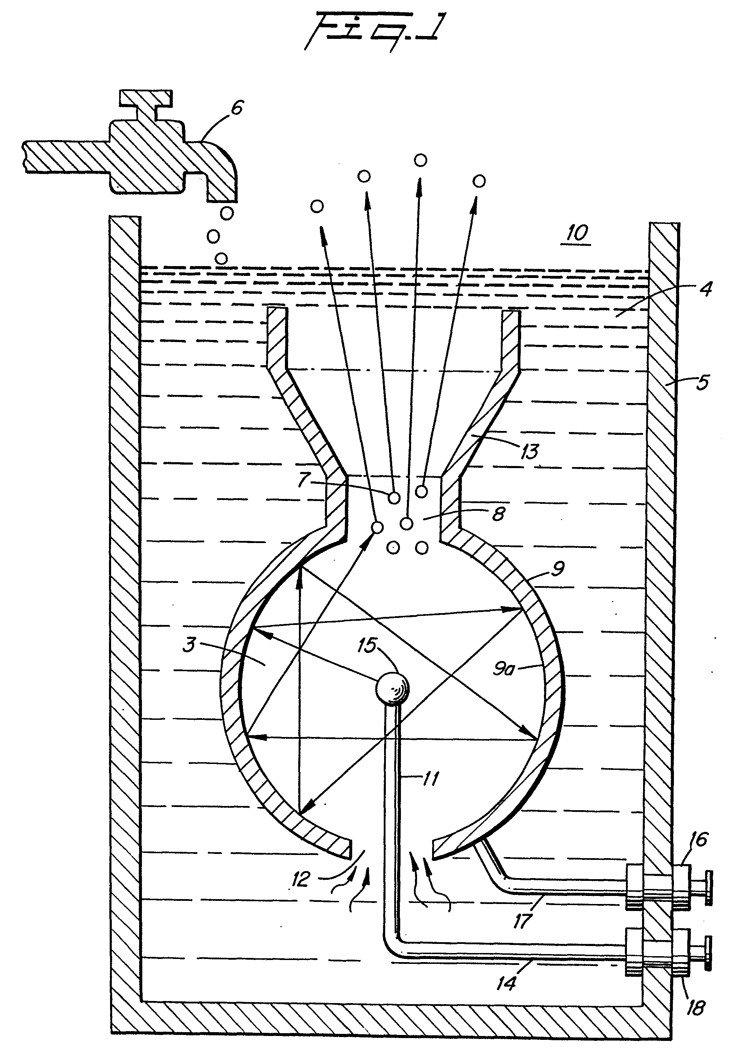

Reference is now made to the several figures depicting the preferred embodiment of the present invention. With particular reference now to Figure 1, illustrating the mechanical schematic in a most simplified form of the invention, the housing 10 is a sphere having a gas expulsion opening 8 in its uppermost region, and a gas guide 13 flared out from the opening 8.

Centrally positioned within the sphere 10 is another sphere 15 of much smaller diameter. The outer shell 9 of the sphere is the grounded negative side. That is, the negative side of a direct current potential is applied via terminal 16 to the outer shell 9. To the inner element 15, the direct current positive potential is applied thereto via terminal wire 18 extended through a support element 11 entering the housing shell 9 through water intake opening 12. The negative potential via terminal 18 is connected to the sphere 9 via terminal 16 and wire 17.

The vessel/housing 5 contains water 4, replenished by faucet 6, at a level above the entire structure. The water 4 is drawn into the outer sphere 9 through the lower opening 12.

As described in my aforesaid patent application the direct current electrical potential is in the nature of a physical force on the water molecule. The sub-atomic action causes the water molecule to break up into its atomic structure -- two parts hydrogen and one part oxygen gas will be liberated from the water. Also other gasses, such as nitrogen, that may be entrapped therein will be released.

EC-2384

In that the aforesaid process is not an electrolysis process, water of any origin may be used, irrespective of the contaminant content. In the process, as the gasses are released the contaminants will be separated and fall to the bottom of the container.

Again, since the process does not in fact generate hydrogen but simply releases the hydrogen, the process is most efficient. The hydrogen released is much greater than the energy expended. Accordingly, the direct current voltage/potential is of extremely low voltage and only of an insignificant current.

There is described in the process of my co-pending patent application apparatus and methods for increasing the output of hydrogen for a given voltage/potential input. For instance plate spacing and plate area are discussed; pulsing the direct current and applying an unfiltered direct current all in one manner or another enhances the release of hydrogen. Increasing the voltage/potential will increase the gas output proportionally.

In each of the apparatus or methods for increasing the output, the physical force applied to the water molecule is the controlling factor. It can be appreciated that limitations may be reached in the control of these dynamic and static forces.

In the present invention, the preferred embodiment utilizes in one manner or another, all of the aforementioned output control factors and is directed primarily to pulsing the direct current potential.

AC-2384

It has been found that the distance between plates of the exciters will have, or can be adjusted to have, a wavelength or partial wavelength, or a multiple wavelength, related to the motion of the water molecule in traveling from the one plate to the other. Therefore, the structure is constructed to be a resonant cavity at some given frequency of the molecular motion.

With specific reference again to Figure 1, the distance from the outer surface of the central element 15 to the inner surface 9a of the outer spherical element 9 will be at some wavelength to the molecular motion of travel. When the wavelength is matched with a physical force equal in frequency to that wavelength the inner area becomes a resonant cavity and the water molecule will forcefully be driven repetitively. As understood in resonant cavities of an electron nature, the molecules are set into motion and will bombard back and forth from the one surface to the next continuously so long as the initial force is applied.

In the sphere of Figure 1, the direction that the water molecules may travel from the inner sphere 15 to the surface 9a of the outer sphere 9 is of an infinite number. Considering a single molecule, the water molecule's motion will under normal conditions be impeded by the water. If the distance between the inner and outer sphere is of a wavelength related to the frequency of the pulsating direct current applied to the water, the water molecule will be set in motion and thereafter enhanced in motion in the resonant cavity 3 and exceed the impediment of water.

.C-2384

Further, the molecule upon striking the inside surface of the outer sphere, will be reflected and directed to an angular surface where it again will be reflected. This action continues indefinately and will continue until the applied energy is terminated. Thus, a resonant cavity causes the water molecule to travel back and forth continuously and at a velocity that increases geometrically.

The above-noted single molecule motion of travel will be further increased in velocity when it is considered that the number of water molecules is infinite and the striking force is not only from surface-to-surface but also from molecule-to-molecule.

The enhanced physical action on the water molecule in the resonant cavity 3 will directly affect the breaking up of the molecule into its gasseous atomic structure. As this occurs the hydrogen, oxygen, and other gasses that may be released from the water will be similarly set into motion. The gas atoms will be reflected from the surface 9a and bombard each other in geometric proportion to the energy applied. The water impediment now is relatively insignificant.

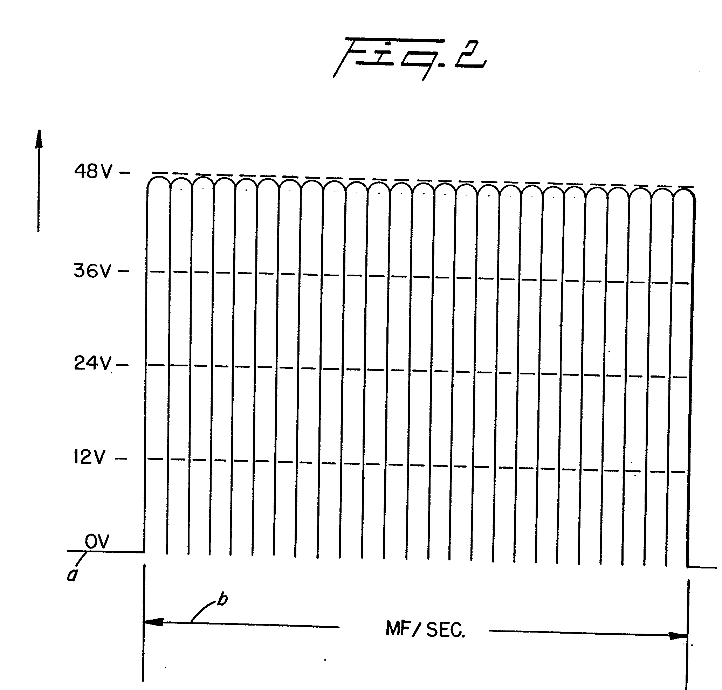

With reference to the graph of Figure 2, the direct current input voltage $a$ is pulsed at a repetition rate, as shown by waveform $b$, (per second) equal to the frequency of the resonant cavity 3.

To enhance the forceful action of the applied pulsed direct current voltage/potential on the water molecule and the sub-atomic action for the release of gasses, the pulsing of the direct current is periodically interrupted as shown in the graph of Figure 2A. That is, the pulse frequency and pulsed direct current $c, c_1$, and $c_2$ is interrupted in uniform intervals $d_1$ $d_2$, and $d_3$. Again, the pulsed direct current may be aperiodically interrupted. That is, the interruption between pulses $c$, $c_1, c_2$, and $c_3$ ... is for different time periods: $e_1, e_2$ and $e_3$.

Returning to Figure 1, an opening 8 is provided in the uppermost portion of the outer sphere 9 of the resonant cavity 3 structure. The travel of the gas atoms 7 bombarding back and forth in the resonant cavity 3 will eventually pass through the opening 8. However, the movement of the gas atoms 7 has been enhanced as aforesaid and when they pass through the opening 8 they are at an extremely high velocity. That is, the motion of the gas atoms 7 will pass out of opening 8 as though they are jet propelled.

The structure of Figure 1 is that of a sphere 9 with another sphere 15 positioned therein. The spacing between the outer surface of the inner sphere 15 to the inner wall 9a of sphere 9 provides a resonant cavity to a given frequency of the physical force of the direct current voltage. Other resonant cavities may be utilized in other arrangements.

C-2384

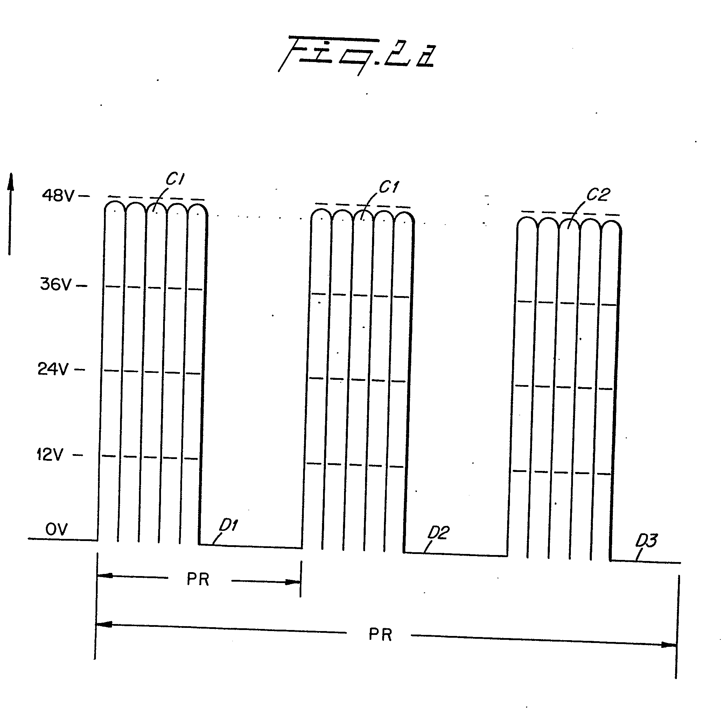

In Figure 3 the resonant cavity structure 20 is utilized in a first completed self contained embodiment. Water 4 is entered via nozzle 19 directly into the chamber of the closed sphere 9.

The structure of Figure 3 is substantially identical in operation to that of Figure 1. However, in this embodiment, the opening 8 and nozzle 2 size is of a controlled diameter. The velocity of the gasses being expelled determines the port of the nozzle 2. That is, the port in the nozzle 2 must be sufficiently large to permit an adequate amount of gas to be expelled to maintain a flame. However, the port in the nozzle 2 must not be enlargened to wherein the velocity of the gasses expelled would be so great that combustion cannot be sustained. The direction of the high velocity gasses is controlled by guide 13. The gasses 7 may be ignited by igniter 25 or utilized directly in another manner.

The resonant cavities of Figures 1,3, and 7 are related to the spacing between an outside and an inside spherical structure comprising a resonant cavity to the excited elements in a sub-atomic process. Other configurations particularly those shown in the aforesaid co-pending patent application, may be constructed or modified to be resonant cavities. The resonant cavities will enhance the release of the gasses in the sub-atomic action, irrespective of its configuration. However, which structure is most productive may be related to its utilization in an operable embodiment.

.C-2384

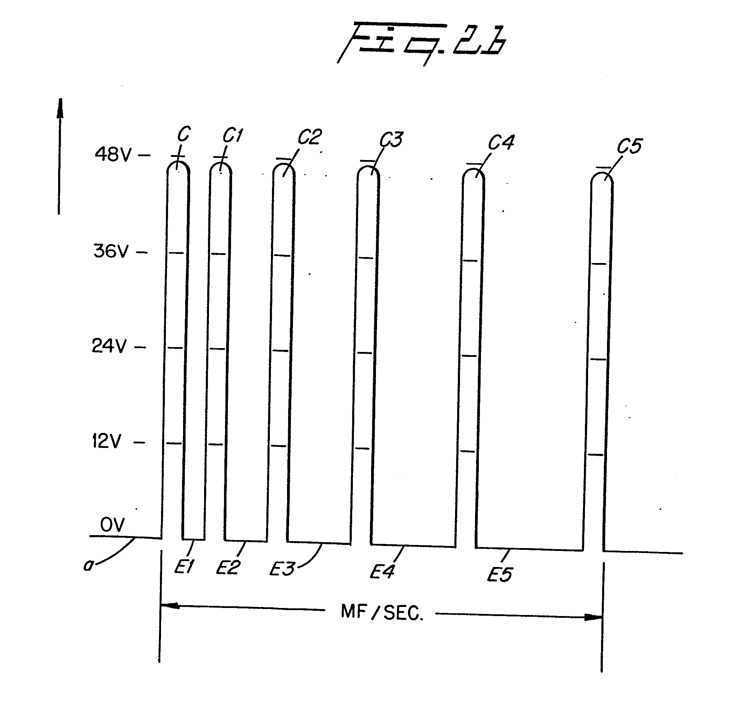

More particularly, the resonant cavity of Figure 4 is an elongated exciter 31. The spacing between the elements 33 and 36 provide the resonant cavity. The gasses 35 in this embodiment will be jettisoned broadside along the slot 32.

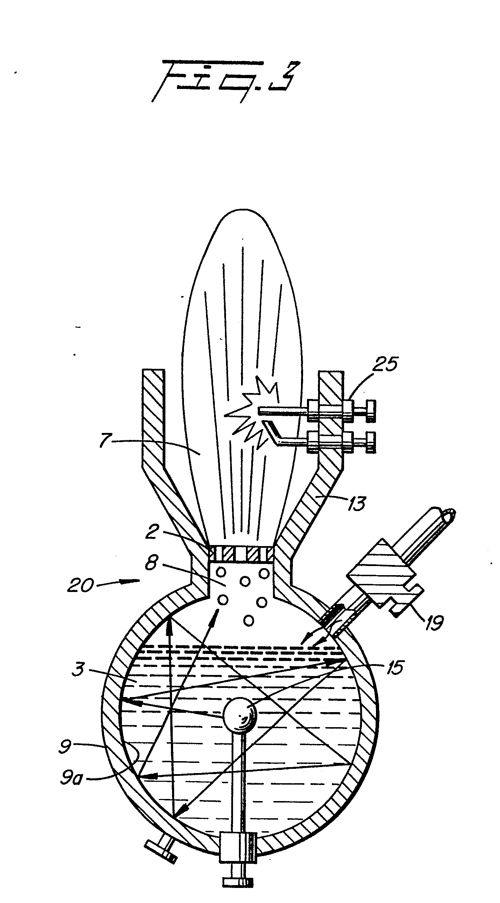

In Figure 5 there is illustrated the coaxial exciter arrangement of the preferred embodiment of the aforementioned co-pending patent application. In this embodiment the spacing 34 between the inner plate 39 and the inner wall of the outer element 37 is adjusted to be resonant at a given frequency. The input direct current is pulsed accordingly. The gasses are propelled along the longitudinal axis of the elements 37 and 39 and expelled from the end 38 of the exciter.

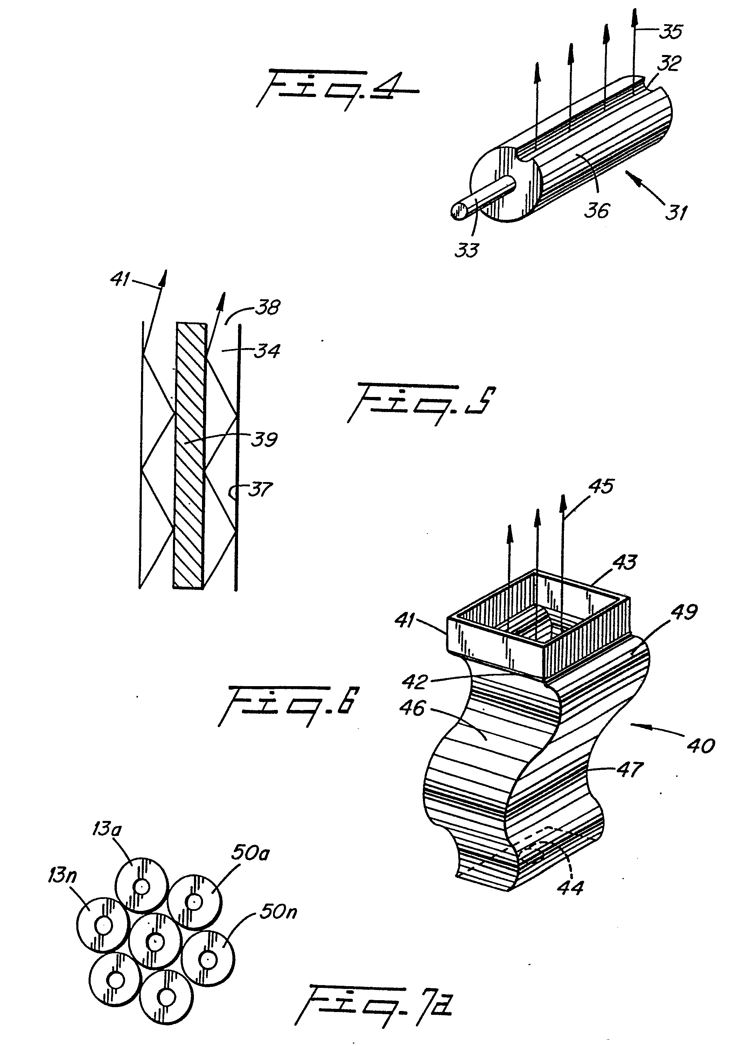

The exciter 40 of Figure 6 is an improvement over the corrugated surface exciter disclosed in my co-pending *US* patent application, Serial Number: 06/367/052. In that exciter, the increased surface area provided by the corrugations and creating the resonant cavity, thus enhances the sub-atomic action.

In the embodiment of Figure 6, the corrugations provide an enhancement of the sub-atomic action, over that aforesaid, on the water entering at 44. The spacing 46 between the plate 41 and 42 is such to be resonant at a particular frequency, as aforementioned. However, instead of a forward direct line back-and-forth path of the atom flow, the corrugations of the convex 47 and concave 49 surfaces causes the atoms to move in forward and backward / back-and-forth path. The increased movement, in turn, increases the sub-atomic action and the velocity of the flow of gasses 45 ommitted from the end of 43 of the exciter 40.

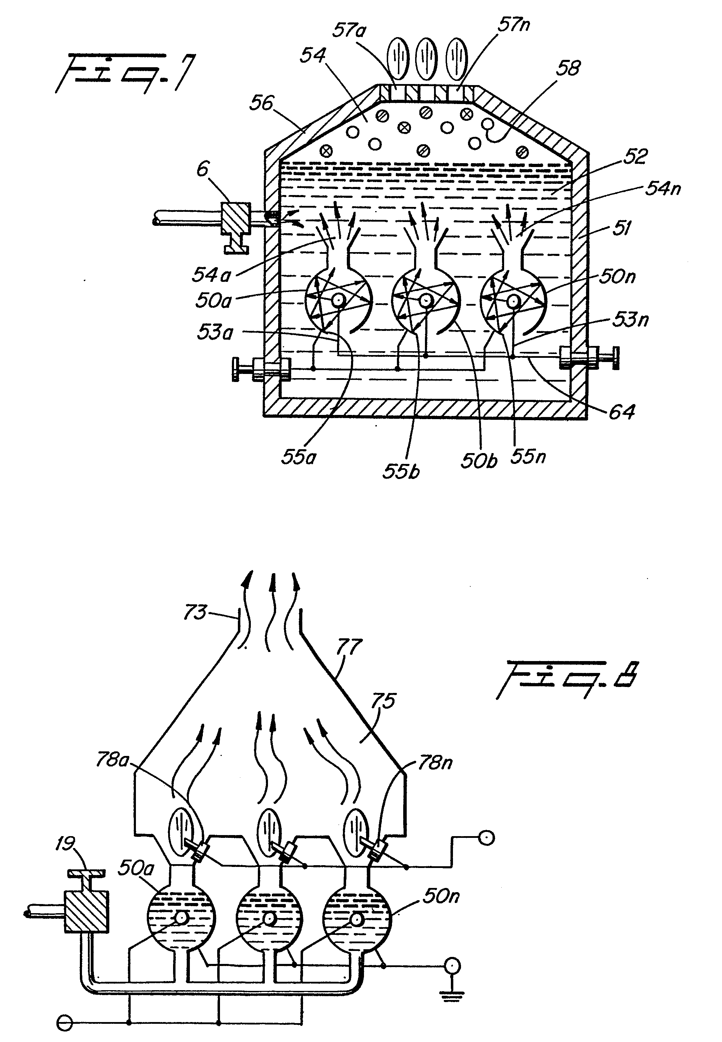

Referring now to Figures 7 and 7A, the structure of Figure 1 is in an array of resonant cavities 50 a xxx n. Specifically the housing 51 having a water 52 therein includes the array of exciters, having a positive potential applied to its central element 53 a xxx n, via terminal 64 and a negative potential to the outer element 55 a xxx n.

The direct current potential is pulsed in a repetitive frequency, as noted above, to match the frequency of the resonant cavity. The gasses 54 a xxx n being released from each of the exciters 50 a xxx n is directed by the guide walls 56 to the upper chamber 58 wherein the high velocity gasses 54 are accumulated. As the gasses 54 are accumulated the pressure in the upper chamber 58 increases proportionally.

With reference to Figure 3, the port 2 is controlled in size of opening relative to the velocity of the gasses. If the port 2 is oversize the velocity of the gasses will be so great that a flame could not be sustained and backfire may occur. Hence the port size is limited.

In Figure 7, the ports 57 a xxx n may be greater in size than the individual port 2 of Figure 3. The individual outputs are not utilized to support a flame hence the significance of limiting the port size and the danger of flashback is not critical. The outputs from each of the exciters are accumulated as gasses 54 in a master chamber 58.

12

AC-2384

With particular reference now to Figure 8 there is illustrated an array of the gas exciters illustrated in Figure 3. The operation of the individual gas exciters is identical to that of Figure 3 except that in the array the several gas flames from the individual exciters are accumulated in chamber 75.

Throughout the above specification the term "plate" is used to denote an element as described. It is specifically understood that the term plate is not to be limited to a flat or planar construction, but may be a structure of any configuration.

Although certain embodiments are shown, modification may be had without departing from the spirit and scope of the invention.

13

iC-2384

CLAIMS:

1. A non-electrolysis process for separating hydrogen and oxygen gas from water, comprising:

at least a pair of electrically conductive, non-oxidizing exciter elements, means for maintaining said pair of elements, spatially positioned for passing water therebetween,

a source of direct current voltage potential having a positive and negative terminal, and means for connecting one of said exciter elements to said negative terminal and means for connecting the other of said exciter elements to said positive potential,

said spatial position between said exciter elements define a resonant cavity to a given wavelength, and

means to pulse said direct/current/voltage potential repetitively at a frequency matching the wavelength of said resonant cavity.

2. A non-electrolysis process as set forth in Claim 1 wherein said exciter elements further comprise a sphere and a second sphere of substantially smaller size, and

means for maintaining said smaller sphere centrally positioned within said other sphere,

said spherical element includes a water inlet in the outer spherical element and another opening therein to permit the gasses to be expelled therefrom.

3. A non-electrolysis process as set forth in Claim 1 wherein said pairs of exciter elements are in an array of identical pairs of exciter elements.

4. A non-electrolysis process as set forth in Claim 3 wherein said exciter elements in an array of identical pairs of exciter elements, each further comprising a sphere and a second sphere of substantially smaller size, and

means for maintaining said smaller sphere centrally positioned within said other sphere, and

said means for accumulating the gasseous outputs from said array of exciter elements into a common chamber.

5. A non-electrolysis process as set forth in Claim 4 wherein said means for accumulating the gasseous outputs from said array of exciter elements into a common chamber, further comprises an igniter for igniting the accumulated gasses, and

means for utilizing said ignited gasses, and

wherein said means for utilizing said ignited gasses comprises a port size controlled nozzle.

6. A non-electrolysis process as set forth in Claim 1 wherein said exciter elements is in a coaxial arrangement,

and, wherein the outside element comprises a longitudinal slot to provide a side projection output.

7. A non-electrolysis process as set forth in Claim 1 wherein said exciter elements are in a coaxial arrangement,

and, wherein said coaxial arrangement is closed at one end and open at the other end to provide an end projection output.

8. A non-electrolysis process as set forth in Claim 1 wherein said exciter elements are flat plates, and

wherein said plates have at least one open end.

9. A non-electrolysis process as set forth in Claim 1 wherein said exciter elements comprise non-planar plates.

3

0103656

10. A non electrolysis process as set forth in Claim 9 wherein said non-planar plates comprise a series of corrugated surfaces and wherein said corrugated surfaces provide a back-and-forth reflective movement of said atoms.

11. A non-electrolysis process as set forth in Claim 2 further comprising igniter means for igniting the gasses therefrom.

12. A non-electrolysis process as set forth in Claim 3 wherein said array of identical pairs of exciter elements, each further comprising a sphere and a second sphere of substantially smaller size.

means for maintaining each of said smaller spheres centrally positioned within said outer sphere,

an igniter for igniting the output gasses from each of the outputs of said spherical elements.

13. A non-electrolysis process as set forth in Claim 12 wherein said exciter elements further comprise a chamber for accumulating the output flames from each of said exciter elements,

an output port for utilizing the combined flame outputs of said exciter elements.

14. A non-electrolysis process as set forth in Claim 4 wherein the process comprises:

a housing having said array of elements positioned therein, and

means for maintaining said water in said housing above a predetermined level.

15. A non-electrolysis process as set forth in Claim 12 further comprising:

a source of water interconnecting each of said exciter elements for maintaining each of said exciter elements at a predetermined water level.

16. A non-electrolysis process as set forth in Claim 1 wherein said means to repetitively pulse said direct current voltage potential further comprises means to periodically interrupt said pulsing.

17. A non-electrolysis process as set forth in Claim 1 wherein said means to repetitively pulse said direct current voltage potential further comprises means to aperiodically interrupt said pulsing.

18. A non-electrolysis process as set forth in Claim 1 wherein said exciter elements are non-oxidizing.

Fig. 1

Fig. 2

Fig.2d

FIG. 2b

MF / SEC.

**FIG.3**

*Fig.4*

35
32
36
31
33

41
38
34
39
37

*Fig.5*

45
43
41
49
42
46
47
40
44

*Fig.6*

13a
50a
13n
50n

*Fig.7a*

FIG.7

FIG.8